# EUROPÄISCHE PATENTSCHRIFT

(11) **EP 4 486 985 B1**
(45) Veröffentlichungstag und Bekanntmachung des Hinweises auf die Patenterteilung: **13.08.2025**
(21) Anmeldenummer: 24733885.8
(22) Anmeldetag: 14.06.2024
(51) Int. Cl.: F01P 7/06, F16L 27/08, F04D 29/36

(54) **HYDRAULISCHE STELLVORRICHTUNG**
HYDRAULIC CONTROL DEVICE
DISPOSITIF DE COMMANDE HYDRAULIQUE

(30) Priorität: 21.12.2023 DE 202023107588 U
(43) Veröffentlichungstag der Anmeldung: 08.01.2025
(73) Patentinhaber: IE ASSETS GMBH & CO. KG, 73614 Schorndorf (DE)
(72) Erfinder: LECHLER, Markus, 73614 Schorndorf (DE); ARNOLD, Samuel, 73614 Schorndorf (DE)
(74) Vertreter: Müller, Gottfried
(86) Internationale Anmeldenummer: PCT/EP2024/025187
(87) Internationale Veröffentlichungsnummer: WO 2024/230951

(56) Entgegenhaltungen:
- EP-B1- 2 923 088
- EP-B1- 3 565 974
- DE-A1- 102017 105 776
- DE-U1- 202017 104 188

## Beschreibung

Die Erfindung betrifft eine hydraulische Stellvorrichtung gemäß Oberbegriff des Anspruches 1.

Aus der EP 2 923 088 B1 ist eine hydraulische Stellvorrichtung mit einem topfförmigen Grundkörper bekannt, der rotierend auf einer Welle gelagert ist, in die ein Hydraulikkanal für die Zufuhr von Hydraulikmedium eingebracht ist. Der Hydraulikkanal mündet in einen Arbeitsraum, der einerseits von dem Grundkörper und andererseits von einem Ringkolben begrenzt ist, welcher axial verstellbar am Grundkörper gelagert ist. Eine ringförmige Dichtungsanordnung mit zwei Ringdichtungen sitzt auf der Welle auf und begrenzt einen Leckagepfad, der sich von der Wellenaußenseite zum Arbeitsraum erstreckt.

Die DE 20 2017 104 188 U1 offenbart eine hydraulische Stellvorrichtung, die bei Lüfterrädern eingesetzt werden kann, die zu ihrer Nabe radial abstehende Lüfterflügel aufweisen. Die Lüfterflügel sind über die hydraulische Stellvorrichtung unter Beibehalt der Drehrichtung des Lüfterrades durch Umschwenken über die Drehebene des Lüfterrades in ihrer Förderrichtung umstellbar. Die hydraulische Stellvorrichtung umfasst einen rotierend auf einer Welle gelagerten Grundkörper, wobei die Welle einen Hydraulikkanal für die Zufuhr von Hydraulikmedium besitzt. Die Stellvorrichtung umfasst einen Leckagerückführungspfad, der sich von der Wellenaußenseite zu Arbeitsraum erstreckt, in den der Hydraulikkanal mündet.

Aus der EP 3 565 974 B1 ist eine hydraulische Drehdurchführung für ein Lüfterrad mit Lüfterflügeln bekannt, die um ihre Längsachse verstellbar sind. Die hydraulische Drehdurchführung weist eine zu einem Drehhals parallel verlaufende Druckleitung für das Arbeitsmittel und eine Sammelleitung für etwaige Leckagen auf.

Die DE 10 2017 105 776 A1 offenbart eine hydraulische Drehdurchführung mit einer Druckleitung für das Arbeitsmittel und einer Sammelleitung für etwaige Leckagen.

Der Erfindung liegt die Aufgabe zugrunde, mit einfachen konstruktiven Maßnahmen eine hydraulische Stellvorrichtung mit hoher Leckagesicherheit auszubilden.

Diese Aufgabe wird erfindungsgemäß mit den Merkmalen des Anspruches 1 gelöst. Die Unteransprüche geben zweckmäßige Weiterbildungen an.

Im Folgenden bedeutet der Begriff "axial" in Richtung oder parallel zur Wellenlängsachse, die zugleich die Längs- und Rotationsachse der hydraulischen Stellvorrichtung bildet. Der Begriff "radial" bedeutet orthogonal zur Wellenlängsachse.

Die erfindungsgemäße hydraulische Stellvorrichtung kann beispielsweise zum Verstellen von Lüfterflügeln eines Lüfterrads eingesetzt werden, die um ihre Flügellängsachsen verschwenkbar gelagert sind. Die hydraulische Stellvorrichtung weist einen Grundkörper auf, der rotierend auf einer Welle gelagert ist, welche mit einem Hydraulikkanal für die Zufuhr von Hydraulikmedium versehen ist. Der Hydraulikkanal mündet in einen volumenveränderlichen Arbeitsraum, der von dem Grundkörper und einem topfförmigen Ringkolben begrenzt ist, welcher axial verstellbar am Grundkörper gelagert ist. Mit dem Einleiten von Hydraulikmedium in den Arbeitsraum wird der Ringkolben gegenüber dem Grundkörper verstellt, wobei die Ringkolbenbewegung als Stellbewegung dient und zur Verstellung auf ein Bauteil übertragbar ist, das entsprechend von einem ersten Zustand in einen zweiten Zustand überführt wird, beispielsweise auf die Lüfterflügel des Lüfterrads, die von einer ersten Flügelposition in eine zweite Flügelposition überführt werden.

In bevorzugter Ausführung ist der Ringkolben axial in Richtung auf den Grundkörper kraftbeaufschlagt, insbesondere über ein oder mehrere Federelemente. Wenn Hydraulikmedium in den Arbeitsraum eingeleitet wird, vergrößert sich das Volumen des Arbeitsraums und verstellt sich der Ringkolben gegen die Federkraft axial.

Die hydraulische Stellvorrichtung umfasst außerdem ein ringförmiges Dichtungselement, das im Grundkörper aufgenommen ist und auf der Welle aufsitzt. Des Weiteren ist in der Stellvorrichtung ein Leckagerückführungspfad gebildet, der sich von der Wellenaußenseite zum Arbeitsraum erstreckt, wobei der Leckagerückführungspfad zumindest teilweise durch das Dichtungselement geführt ist. Über den Leckagerückführungspfad kann Hydraulikmedium in den Arbeitsraum zurückgeführt werden, das sich von dem Arbeitsraum entfernend an der Wellenaußenseite zwischen der Welle und dem Dichtungselement ausbreitet.

Die Welle weist mindestens zwei Axialabschnitte mit unterschiedlichem Außendurchmesser auf, wobei das Dichtungselement auf dem Axialabschnitt kleineren Außendurchmessers aufsitzt und eine Dichtlippe des Dichtungselements an der Wellenaußenseite anliegt. Das Dichtungselement stützt sich axial an einem Stützring ab, der im Grundkörper aufgenommen ist. Gegebenenfalls stützt sich die Dichtlippe des Dichtungselements an dem Stützring ab.

Diese Ausführung hat verschiedene Vorteile. Das Dichtungselement sitzt im Grundkörper und rotiert gemeinsam mit diesem relativ zur Welle, wobei aufgrund des reduzierten Wellendurchmessers eine kleinere Umfangsgeschwindigkeit des Dichtungselements im Kontaktbereich zur Welle gegeben ist. Der Wellendurchmesser ist in diesem Axialabschnitt beispielsweise um 20% reduziert, so dass entsprechend auch die Umfangsgeschwindigkeit um diesen Betrag kleiner ist als im Axialabschnitt der Welle mit größerem Durchmesser. Hierdurch werden die Belastung und der Abrieb des Dichtungsmaterials reduziert und wird die Laufzeit des Dichtungselements und damit auch der Stellvorrichtung erhöht.

Vorteilhaft ist es außerdem, dass sich das Dichtungselement an dem Stützring axial abstützt. Axialkräfte, die auf das Dichtungselement wirken, werden von dem Stützring aufgenommen. Das Dichtungselement ist axial zwischen einem Abschnitt des Grundkörpers und dem Stützring eingeklemmt und in dieser Position axial gesichert. Anschlüsse zwischen Kanälen des Leckagerückführungspfads im Übergang zum bzw. vom Dichtungselement bleiben mit hoher Maßgenauigkeit über einen langen Betriebszeitraum erhalten.

Der Stützring befindet sich vorteilhafterweise axial in Höhe der Übergangsschulter zwischen den Wellenabschnitten mit unterschiedlichem Außendurchmesser. Es ist zweckmäßig, dass der Stützring einen größeren Innendurchmesser als der Wellenaußendurchmesser aufweist und radial auf Abstand zur Wellenaußenseite liegt. Dies stellt sicher, dass während der Umdrehung des Grundkörpers einschließlich Stützring kein Reibkontakt zwischen dem Stützring und der Wellenaußenseite besteht.

Gemäß einer weiteren vorteilhaften Ausführung liegt das Dichtungselement axial auf der dem Arbeitsraum zugewandten Stirnseite an einem Vorspannelement an, das im Grundköper aufgenommen ist.

Sowohl das Vorspannelement als auch der Stützring können sich jeweils über nur einen Teil der radialen Breite der jeweiligen Stirnseite des Dichtungselements erstrecken. Dies ermöglicht es beispielsweise, die Stirnseiten des Dichtungselements mit konturierten Oberflächen mit Absätzen auszubilden, die jeweils nur abschnittweise von dem Vorspannelement bzw. dem Stützring abgestützt werden.

Gemäß noch einer vorteilhaften Ausführung weist der Grundkörper eine Grundkörperbasis und einen Dichtungsflansch auf, der unmittelbar an den Aufnahmeraum angrenzt. Der Grundkörper ist somit zumindest zweiteilig aufgebaut, was den Vorteil hat, dass das Dichtungselement im noch nicht montierten Zustand auf die Welle aufgeschoben und in Position insbesondere im Dichtungsflansch gebracht werden kann, woraufhin der Dichtungsflansch mit der Grundkörperbasis fest verbunden wird und das Dichtungselement seine endgültige, gewünschte Position zwischen Grundkörperbasis und Dichtungsflansch einnimmt.

Zur drehbaren Lagerung um die Wellenlängsachse befindet sich vorteilhafterweise im Grundkörper eine die Welle aufnehmende Lageranordnung. Beim Aufschieben der Lageranordnung auf die Welle kann es zweckmäßig sein, zunächst ein schlauchförmiges Hilfsmittel auf die Welle im Bereich des durchmesserreduzierten Axialabschnitts aufzubringen und anschließend das Dichtungselement aufzuschieben, um Beschädigungen am Dichtsitz während dieses Montageschritts zu vermeiden. Nachdem die Lageranordnung ihre Sollposition auf der Welle erreicht hat, kann das schlauchförmige Hilfsmittel wieder entfernt werden.

Der Dichtungsflansch kann mit einem Gewindeabschnitt versehen sein, der mit einem Gegengewinde an der Grundkörperbasis verschraubbar ist. Diese Ausführung hat den Vorteil, dass keine zusätzlichen Befestigungselemente für die Verbindung von Grundkörperbasis und Dichtungsflansch erforderlich sind. Es genügt vielmehr, den Dichtungsflansch mit der Grundkörperbasis zu verschrauben. Der Gewindeabschnitt befindet sich beispielsweise an einem zylindrischen Aufnahmedom am Dichtungsflansch und ist als Außengewinde am Aufnahmedom ausgebildet, das mit einem zugeordnetes Innengewinde in einer mit dem Aufnahmedom korrespondierenden Ausnehmung in der Grundkörperbasis verschraubbar ist.

Gemäß einer weiteren vorteilhaften Ausführung ist in den Dichtungsflansch ein Leckagekanal eingebracht, der Teil des Leckagerückführungspfads ist und mit einem Dichtungsleckagekanal strömungsverbunden ist, der ebenfalls Teil des Leckagerückführungspfads ist und durch das Dichtungselement führt. Leckagefluid kann somit von der Wellenaußenseite über den Dichtungsleckagekanal in dem Dichtungselement und den Leckagekanal in dem Dichtungsflansch zurück in den Arbeitsraum geführt werden. Der Dichtungsleckagekanal im Dichtungselement verläuft vorzugsweise radial zur Wellenlängsachse und der Leckagekanal im Dichtungsflansch zumindest abschnittsweise axial.

Gemäß noch einer weiteren vorteilhaften Ausführung endet die Stirnseite der Welle im Dichtungsflansch, in den eine Hydraulikbohrung eingebracht ist, die mit dem Hydraulikkanal in der Welle fluchtet. Hierbei ist es besonders zweckmäßig, dass der Innendurchmesser der Hydraulikbohrung im Dichtungsflansch gleich groß ist wie der Innendurchmesser des Hydraulikkanals in der Welle. In dieser Ausführung ist ein durchgehender Strömungsweg ohne Durchmesseränderungen von der Welle bis zur Hydraulikbohrung im Dichtungsflansch gegeben, wodurch ein kontinuierlicher Strömungsfluss des zuzuführenden Hydraulikmediums gesichert ist.

In noch einer weiteren vorteilhaften Ausführung ist Mantelfläche der Welle mit einer reibungsreduzierenden Beschichtung versehen. Hierdurch wird zwischen der Welle und dem auf der Welle aufsitzenden und sich relativ zur Welle drehenden Dichtungselement die Reibung reduziert.

Die Erfindung bezieht sich außerdem auf ein Lüfterrad mit Lüfterflügeln, die um ihre Flügellängsachsen verschwenkbar gelagert sind, wobei das Lüfterrad mit einer vorbeschriebenen Stellvorrichtung zur Verschwenkung der Lüfterflügel ausgestattet ist. Die axiale Stellbewegung des Ringkolbens wird in Schwenkbewegung der Lüfterflügel umgesetzt. Die Stellvorrichtung kann die Nabe des Lüfterrads bilden.

Weitere Vorteile und zweckmäßige Ausführungen sind den weiteren Ansprüchen, der Figurenbeschreibung und den Zeichnungen zu entnehmen. Es zeigen:

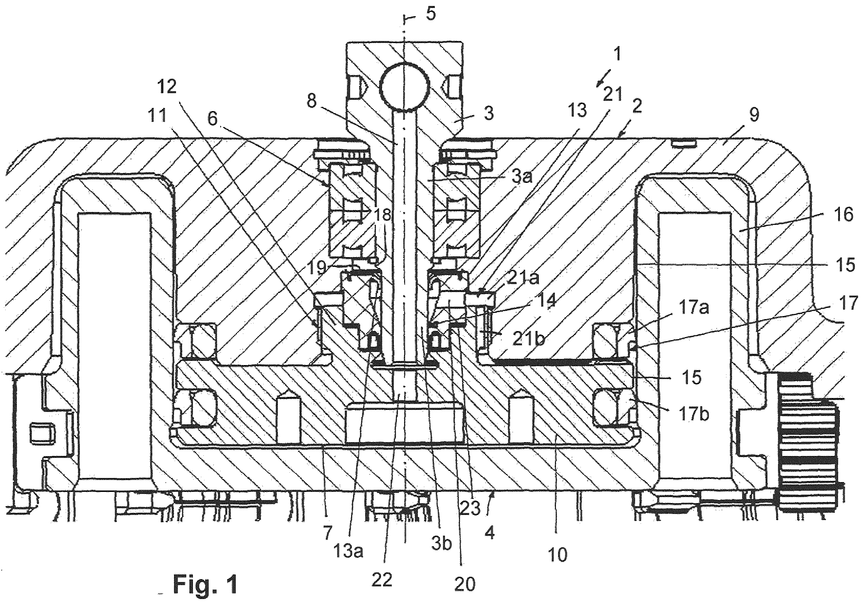

- Fig. 1: einen Längsschnitt durch eine hydraulische Stellvorrichtung, mit einem Grundkörper, der rotierend auf einer Welle gelagert ist, welche einen Hydraulikkanal für die Zufuhr von Hydraulikmedium aufweist, mit einem Ringkolben, welcher axial verstellbar am Grundkörper gelagert ist, und mit einem ringförmigen Dichtungselement, das auf der Welle aufsitzt,

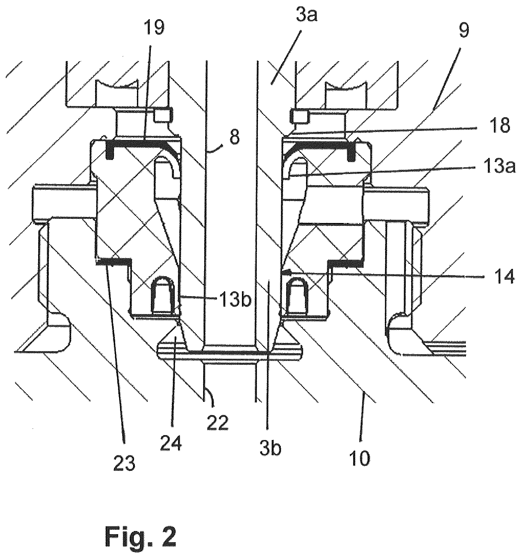

- Fig. 2: eine Ausschnittvergrößerung aus dem Bereich des Dichtungselements.

In den Figuren sind gleiche Bauteile mit gleichen Bezugszeichen versehen.

Die gezeigte Stellvorrichtung 1 ist hydraulisch betätigbar ausgebildet und kann beispielsweise zur Verstellung von Lüfterflügeln, die in einem Lüfterrad um ihre Flügellängsachsen verschwenkbar gelagert sind, eingesetzt werden. Die Stellvorrichtung 1 umfasst einen Grundkörper 2, eine Welle 3 und einen Ringkolben 4, wobei die Welle 3 ortsfest und somit feststehend und der Grundkörper 2 und der Ringkolben 4 drehend um die Wellenlängsachse 5 der Welle 3 gelagert sind. Dies ermöglicht es beispielsweise, die Stellvorrichtung 1 in eine Nabe eines Lüfterrades zu integrieren, wobei über die feststehende Welle 3 Hydraulikmedium zur Aktuierung der Stellvorrichtung 1 und der verstellbaren Lüfterflügel des Lüfterrades zuführbar ist. Zur drehbaren Lagerung um die Wellenlängsachse 5 befindet sich im Grundkörper 2 eine die Welle 3 aufnehmende Lageranordnung 6.

Der Ringkolben 4 ist drehfest, jedoch axial verstellbar am Grundkörper 2 gelagert und über Federelemente in Richtung auf den Grundkörper 2 kraftbeaufschlagt. Zwischen der Stirnseite des Grundkörpers 2 und der zugewandten Stirnseite des Ringkolbens 4 befindet sich ein Arbeitsraum 7, der volumenveränderlich ausgebildet ist und zur Aufnahme von Hydraulikmedium dient, das über die Welle 3 herangeführt wird. In die Welle 3 ist ein Hydraulikkanal 8 eingebracht, der sich in Axialrichtung erstreckt und über den das Hydraulikmedium von außen in Richtung Arbeitsraum 7 geleitet wird. Sobald Hydraulikmedium in den Arbeitsraum 7 einströmt, vergrößert sich das Volumen des Arbeitsraums 7, indem der Ringkolben 4 axial gegen die Kraft der Federelemente von dem Grundkörper 2 weggedrückt wird. Diese Bewegung des Ringkolbens 4 dient als Stellbewegung und wird beispielhaft zur Verstellung der Lüfterflügel des Lüfterrades eingesetzt.

Der Grundkörper 2 ist zweiteilig aufgebaut und setzt sich aus einer Grundkörperbasis 9 und einem Dichtungsflansch 10 zusammen, dessen Stirnseite unmittelbar an den Arbeitsraum 7 angrenzt und der Stirnseite des benachbarten Ringkolbens 4 zugewandt ist, die eine weitere Begrenzungsfläche für den Arbeitsraum 7 bildet. Der Dichtungsflansch 10 ist über eine Schraubverbindung 11 mit der Grundkörperbasis 9 verbunden. Hierfür ist der Dichtungsflansch 10 mit einem als Außengewinde ausgebildeten Gewindeabschnitt versehen ist, der an einem Aufnahmedom 12 des Dichtungsflansches 10 gebildet ist und mit einem als Innengewinde ausgeführten Gegengewinde an einer korrespondierenden Ausnehmung in der Grundkörperbasis verschraubbar ist.

In den Dichtungsflansch 10 ist ein Aufnahmekanal zur Aufnahme der Welle 3 eingebracht. Die Stirnseite der Welle 3 endet im Dichtungsflansch 10, in den eine Hydraulikbohrung 22 eingebracht ist, welche koaxial verlaufend sich an den Aufnahmekanal anschließt und mit dem Hydraulikkanal 8 in der Welle 3 fluchtet. Der Innendurchmesser der Hydraulikbohrung 22 im Dichtungsflansch 10 ist gleich groß wie der Innendurchmesser des Hydraulikkanals 8 in der Welle 3, wodurch ein durchgehender Strömungsweg ohne Durchmesseränderungen von der Welle 3 bis zur Hydraulikbohrung 22 im Dichtungsflansch 10 gegeben und ein kontinuierlicher Strömungsfluss des Hydraulikmediums gesichert ist. Der Aufnahmekanal zur Aufnahme der Welle 3 weist im Übergang zu der Hydraulikbohrung 22, die einen kleinere Durchmesser als der Aufnahmekanal besitzt, eine ringförmige Schmutzsammelnut 24 auf. Die Schmutzsammelnut 24 weist einen größeren Durchmesser auf als der Aufnahmekanal.

In eine Vertiefung des Aufnahmedoms 12 ist ein ringförmiges, sich am Aufnahmedom 12 axial abstützendes Dichtungselement 13 eingesetzt, in das die Welle 3 eingeschoben ist. Die Mantelfläche der Welle 3 ist mit einer reibungsreduzierenden Beschichtung versehen, so dass die Drehbewegung des Dichtungselements 13 um die Welle 3 entsprechend reibungsarm abläuft. Das Dichtungselement 13 liegt in einem ersten Leckagepfad 14, der sich von der Außenseite der Welle 3 zum Arbeitsraum 7 erstreckt und über den eine Leckage des Hydraulikmediums, das sich axial entlang der Wellenaußenseite vom Arbeitsraum 7 ausgehend ausbreitet, wieder in den Arbeitsraum 7 zurückgeführt wird. Ein zweiter Leckagepfad 15 verläuft vom Arbeitsraum 7 ausgehend zwischen einer Innenwand eines Ringdoms 16 des Ringkolbens 4 und einer benachbarten Wand von Grundkörperbasis 9 und Dichtungsflansch 10. Dem zweiten Leckagepfad 15 ist eine Dichtungsanordnung 17 mit zwei einzelnen Ringdichtungen 17a, 17b in der Grundkörperbasis 9 und im Dichtungsflansch 10 zugeordnet. Die Dichtungsanordnung 17 hat eine Rückförderwirkung zur Rückförderung von Leckage in Richtung des Arbeitsraums 7.

Die Welle 3 weist mehrere Axialabschnitte mit unterschiedlichem Außendurchmesser auf. Ein Axialabschnitt 3a der Welle 3 mit größerem Außendurchmesser ragt in die Grundkörperbasis 9 hinein, wohingegen ein sich daran anschließender Axialabschnitt 3b mit kleinerem Außendurchmesser in den Dichtungsflansch 10 hineinragt. Zwischen den Axialabschnitten 3a, 3b ist eine ringförmige Übergangsschulter 18 an der Wellenaußenseite gebildet.

Das Dichtungselement 13 sitzt auf dem Axialabschnitt 3b kleineren Außendurchmessers auf, wobei eine Dichtlippe 13a des Dichtungselements 13 an der Wellenaußenseite anliegt und den ersten Leckagepfad 14 begrenzt. Das Dichtungselement 13 einschließlich Dichtlippe 13a stützt sich axial auf der dem Arbeitsraum 7 abgewandten Seite an einem Stützring 19 ab, der in der Grundkörperbasis 9 aufgenommen ist und sich dort abstützt. Der Stützring 19 weist einen größeren Innendurchmesser als der Außendurchmesser der Welle 3 auf und liegt radial auf Abstand zur Wellenaußenseite, wodurch ein Reibkontakt zwischen dem Stützring 19 und der Wellenaußenseite vermieden wird.

Die Dichtlippe 13a des Dichtungselements 13 begrenzt den Leckagepfad 14 auf der Niederdruckseite. Eine zweite Dichtlippe 13b des Dichtungselements 13, die sich axial auf Abstand zur ersten Dichtlippe 13a befindet und näher am Arbeitsraum 7 liegt, begrenzt den Leckagepfad 14 auf der Hochdruckseite.

Auf der dem Arbeitsraum 7 zugewandten Stirnseite liegt das Dichtungselement 13 an einem ringförmigen Vorspannelement 23 an, das im Dichtungsflansch 10 aufgenommen ist.

Ein Leckagerückführungspfad zur Rückführung von Leckagefluid von der Außenseite der Welle 3 zum Arbeitsraum 7 umfasst einen radialen Dichtungsleckagekanal 20 im Dichtungselement 13 und einen sich an den Dichtungsleckagekanal 20 anschließenden Leckagekanal 21 im Dichtungsflansch 10. Der Leckagekanal 21 besteht aus einem ringförmigen Aufnahmeraum 21a, der sich radial außen an den Dichtungsleckagekanal 20 im Dichtungselement 13 anschließt, und mehreren über den Umfang verteilten und vom Aufnahmeraum 21a verzweigenden axialen Bohrungen 21b, die in den Grenzbereich zwischen Grundkörperbasis 9 und Dichtungsflansch 10 einmünden. Die zwei Ringdichtungen der Dichtungsanordnung 17 liegen axial unterhalb und oberhalb des Grenzbereichs zwischen Grundkörperbasis 9 und Dichtungsflansch 10.

Die Dichtlippe 13a des Dichtungselements 13 verhindert, dass Leckagefluid, das sich vom Arbeitsraum 7 axial entlang der Außenseite der Welle 3 ausbreitet, über das Dichtungselement 13 hinausströmt. Die Dichtlippe 13a lenkt das Leckagefluid radial nach außen in den radialen Dichtungsleckagekanal 20 im Dichtungselement 13, was durch die Rotation von Grundkörper 2 und Ringkolben 4 unterstützt wird. Vom Dichtungsleckagekanal 20 gelangt das Leckagefluid weiter radial nach außen in den umschließenden, ringförmigen Aufnahmeraum 21a und weiter über die Bohrungen 21b axial nach unten in den Grenzbereich zwischen Grundkörperbasis 9 und Dichtungsflansch 10, von wo aus das Leckagefluid die Dichtungsanordnung 17 passiert und in den Arbeitsraum 7 zurückströmt.

## Patentansprüche

1. Hydraulische Stellvorrichtung mit einem Grundkörper (2), der rotierend auf einer Welle gelagert ist, welche einen Hydraulikkanal (8) für die Zufuhr von Hydraulikmedium aufweist, wobei der Hydraulikkanal (8) in einen Arbeitsraum (7) mündet, der von dem Grundkörper (2) und einem Ringkolben (4) begrenzt ist, welcher axial verstellbar am Grundkörper (2) gelagert ist, mit einem ringförmigen Dichtungselement (13), das im Grundkörper (2) aufgenommen ist und auf der Welle (3) aufsitzt, und mit einem Leckagerückführungspfad, der sich von der Wellenaußenseite zum Arbeitsraum erstreckt, wobei der Leckagerückführungspfad durch das Dichtungselement (13) geführt ist und wobei die Welle (3) mindestens zwei Axialabschnitte (3a, 3b) mit unterschiedlichem Außendurchmesser aufweist, wobei das Dichtungselement (13) auf dem Axialabschnitt (3b) kleineren Außendurchmessers aufsitzt, **dadurch gekennzeichnet,**
**dass** eine Dichtlippe (13a) des Dichtungselements (13) an der Wellenaußenseite anliegt, wobei das Dichtungselement (13) sich axial an einem Stützring (19) abstützt, der im Grundkörper (2) aufgenommen ist.

2. Stellvorrichtung nach Anspruch 1,
**dadurch gekennzeichnet,**
**dass** der Grundkörper (2) eine Grundkörperbasis (9) und einen Dichtungsflansch (10) aufweist, der unmittelbar an den Aufnahmeraum (7) angrenzt.

3. Stellvorrichtung nach Anspruch 2,
**dadurch gekennzeichnet,**
**dass** der Dichtungsflansch (10) mit einem Gewindeabschnitt (11) versehen ist, der mit einem Gegengewinde an der Grundkörperbasis (9) verschraubbar ist.

4. Stellvorrichtung nach Anspruch 2 oder 3,
**dadurch gekennzeichnet,**
**dass** in den Dichtungsflansch (10) ein Leckagekanal (21) eingebracht ist, der Teil des Leckagerückführungspfads ist.

5. Stellvorrichtung nach einem der Ansprüche 2 bis 4,
**dadurch gekennzeichnet,**
**dass** die Stirnseite der Welle (3) im Dichtungsflansch (10) endet, in den eine Hydraulikbohrung (22) eingebracht ist, die mit dem Hydraulikkanal (8) in der Welle (3) fluchtet.

6. Stellvorrichtung nach Anspruch 5,
**dadurch gekennzeichnet,**
**dass** der Innendurchmesser der Hydraulikbohrung (22) im Dichtungsflansch (10) gleich groß ist wie der Innendurchmesser des Hydraulikkanals (8) in der Welle (3).

7. Stellvorrichtung nach einem der Ansprüche 1 bis 6,
**dadurch gekennzeichnet,**
**dass** der Stützring (19) einen größeren Innendurchmesser als der Wellenaußendurchmesser aufweist und radial auf Abstand zur Wellenaußenseite liegt.

8. Stellvorrichtung nach einem der Ansprüche 1 bis 7,
**dadurch gekennzeichnet,**
**dass** das Dichtungselement (13) auf der dem Arbeitsraum (7) zugewandten Stirnseite an einem Vorspannelement (23) anliegt, das im Grundköper (2), insbesondere im Dichtungsflansch (10) aufgenommen ist.

9. Stellvorrichtung nach einem der Ansprüche 1 bis 8,
**dadurch gekennzeichnet,**
**dass** in das Dichtungselement (13) ein radial zur Wellenlängsachse (5) verlaufender Dichtungsleckagekanal (20) eingebracht ist, der Teil des Leckagerückführungspfads ist.

10. Stellvorrichtung nach einem der Ansprüche 1 bis 9, **dadurch gekennzeichnet,**
**dass** die Mantelfläche der Welle (3) mit einer reibungsreduzierenden Beschichtung versehen ist.

11. Lüfterrad mit Lüfterflügeln, die um ihre Flügellängsachsen verschwenkbar gelagert sind, mit einer Stellvorrichtung (1) nach einem der Ansprüche 1 bis 10 zur Verschwenkung der Lüfterflügel.

## Claims

1. A hydraulic position control arrangement comprising a base body (2) rotatably supported on a shaft (3) which includes a hydraulic channel (8) for the admission of hydraulic fluid to an operating chamber (7) which is delimited by the base body (2) and an annular piston (4) which is axially adjustably supported on the base body (2), an annular seal element (13) disposed on the shaft (3) within the base body (2) and with a leakage return path extending from the outside area of the shaft to the operating chamber (7), wherein the leakage return path extends through the annular seal element (13) and the shaft (3) has at least two axial sections (3a, 3b) of different outside diameters and the annular seal element (13) is seated on the axial section (3b) of smaller diameter, **characterized in that**,
the seal element (13) is axially supported by a support ring (19) provided in the base body (2) and has a seal lip (13a) which abuts the outside of the shaft (3).

2. The position control arrangement according to claim 1, **characterized in that** the base body (2) includes a base body base (9) and a sealing flange (10) disposed directly adjacent the operating chamber (7).

3. The position control arrangement according to claim 2, **characterized in that** the sealing flange (10) is provided with a threaded section (11) threaded into a counter thread provided on the base body base (9).

4. The position control arrangement according to claim 2 or 3, **characterized in that** the sealing flange (10) includes a leakage passage (21) which is part of the leakage return path.

5. The position control arrangement according to one of claims 2 to 4, **characterized in that** the shaft (3) has a front section (3b) that ends in the sealing flange (10) which is provided with a hydraulic bore (22) which is in alignment with the hydraulic channel (8).

6. The position control arrangement according to claim 5, **characterized in that** the inner diameter of the hydraulic bore (22) in the sealing flange (10) is the same as that of the hydraulic channel (8) in the shaft (3).

7. The position control arrangement according to one of claims 1 to 6, **characterized in that** the inner diameter of the support ring (19) is larger than the outer diameter of the shaft (3) and the support ring is arranged on the shaft (3) with radial spacing from the outside of the shaft (3).

8. The position control arrangement according to one of claims 1 to 7, **characterized in that** the seal element (13) on the front side facing the operating chamber (7), abuts a spring element (23) which is accommodated in the seal flange (10).

9. The position control arrangement according to one of claims 1 to 8, **characterized in that** the seal element (13) is provided with a seal leakage passage (20) which extends radially with respect to the shaft axis (5) and is part of the leakage return path.

10. The position control arrangement according to one of claims 1 to 9, **characterized in that** the surface of the shaft (3) has a friction reducing coating.

11. A fan wheel with fan blades which are supported pivotally about the longitudinal blade axes with a fan blade position control arrangement (1) according to one of the claims 1 - 10 for pivoting the fan blades.

## Revendications

1. Dispositif de réglage hydraulique avec un corps de base (2) qui est logé de manière rotative sur un arbre qui présente un canal hydraulique (8) pour l'alimentation en fluide hydraulique, le canal hydraulique (8) débouchant dans un espace de travail (7) qui est délimité par le corps de base (2) et un piston annulaire (4) qui est logé de manière réglable axialement sur le corps de base (2), avec un élément d'étanchéité annulaire (13) qui est reçu dans le corps de base (2) et repose sur l'arbre (3), et avec un chemin de retour de fuite, qui s'étend depuis le côté extérieur de l'arbre jusqu'à l'espace de travail, le chemin de retour de fuite étant guidé par l'élément d'étanchéité (13) et l'arbre (3) présentant au moins deux sections axiales (3a, 3b) de diamètre extérieur différent, l'élément d'étanchéité (13) reposant sur la section axiale (3b) de plus petit diamètre extérieur,
**caractérisé en ce que**
une lèvre d'étanchéité (13a) de l'élément d'étanchéité (13) repose sur la face extérieure de l'arbre, l'élément d'étanchéité (13) s'appuyant axialement sur une bague d'appui (19) qui est logée dans le corps de base (2).

2. Dispositif de réglage selon la revendication 1, **caractérisé en ce que** le corps de base (2) comporte une base (9) et une bride d'étanchéité (10) directement adjacente à l'espace de travail (7).

3. Dispositif de réglage selon la revendication 2, **caractérisé en ce que** la bride d'étanchéité (10) est pourvue d'une partie filetée (11) pouvant être vissée sur un filetage correspondant de la base (9).

4. Dispositif de réglage selon la revendication 2 ou 3, **caractérisé en ce qu'**un canal de fuite (21) est intégré à la bride d'étanchéité (10), lequel fait partie du chemin de retour des fuites.

5. Dispositif d'actionnement selon l'une des revendications 2 à 4,
**caractérisé en ce que** la face frontale de l'arbre (3) se termine par la bride d'étanchéité (10), dans laquelle est ménagé un alésage hydraulique (22) aligné avec le canal hydraulique (8) de l'arbre (3).

6. Dispositif d'actionnement selon la revendication 5, **caractérisé en ce que** le diamètre intérieur de l'alésage hydraulique (22) de la bride d'étanchéité (10) est identique au diamètre intérieur du canal hydraulique (8) de l'arbre (3).

7. Dispositif d'actionnement selon l'une des revendications 1 à 6,
**caractérisé en ce que** la bague d'appui (19) présente un diamètre intérieur supérieur au diamètre extérieur de l'arbre et est radialement espacée de la surface extérieure de l'arbre.

8. Dispositif d'actionnement selon l'une des revendications 1 à 7,
**caractérisé en ce que** l'élément d'étanchéité (13) repose, sur sa face frontale tournée vers l'espace de travail (7), contre un élément de précontrainte (23) logé dans le corps de base (2), notamment dans la bride d'étanchéité (10).

9. Dispositif d'actionnement selon l'une des revendications 1 à 8,
**caractérisé en ce qu'**un canal de fuite (20) s'étendant radialement par rapport à l'axe longitudinal de l'arbre (5) est intégré à l'élément d'étanchéité (13), lequel fait partie du chemin de retour des fuites.

10. Dispositif de réglage selon l'une des revendications 1 à 9, **caractérisé en ce que** la surface extérieure de l'arbre (3) est dotée d'un revêtement réduisant les frottements.

11. Roue de ventilateur avec pales montées pivotantes autour de leurs axes longitudinaux, équipée d'un dispositif de réglage (1) selon l'une des revendications 1 à 10 pour le pivotement des pales.
